# EUROPÄISCHE PATENTANMELDUNG

(11) **EP 3 269 572 A1**
(43) Veröffentlichungstag der Anmeldung: **17.01.2018**
(21) Anmeldenummer: 17179794.7
(22) Anmeldetag: 05.07.2017
(51) Int. Cl.: B60H 1/22, F24H 3/02

(54) **HEIZVORRICHTUNG UND VERFAHREN ZUM BETREIBEN EINER HEIZVORRICHTUNG**

(30) Priorität: 13.07.2016 DE 102016112887
(71) Anmelder: Truma Gerätetechnik GmbH & Co. KG, 85640 Putzbrunn (DE)
(72) Erfinder: Armbruster, Uwe, 82178 München (DE); Laging, Johannes, 81829 München (DE)
(74) Vertreter: Prinz & Partner mbB

(57) **Zusammenfassung**

Es wird eine Heizvorrichtung (10) zur Erzeugung eines Warmluftstroms (12) beschrieben, die insbesondere für ein Camping-Mobil verwendet werden kann. Die Heizvorrichtung (10) umfasst ein einziges Gebläse (28), ein Brenner-Heizelement (20) und ein Widerstands-Heizelement (18). Dabei schließt sich an das Gebläse (28) stromabwärts ein Luftkanal (14), der zu erwärmende Luft führt, und ein Verbrennungsluftkanal (24) an, der zu einem Brenner (22) führt, wobei ein Verbrennungsluftstrom (26) im Verbrennungsluftkanal (24) durch ein dem Verbrennungsluftkanal (24) zugeordnetes Steuerungselement (32) gesteuert werden kann. Darüber hinaus wird ein Verfahren zum Betreiben einer Heizvorrichtung (10) beschrieben.

## Beschreibung

Die Erfindung betrifft eine Heizvorrichtung zur Erzeugung eines Warmluftstroms, insbesondere für ein Camping-Mobil.

Zusätzlich betrifft die Erfindung ein Verfahren zum Betreiben einer Heizvorrichtung zur Erzeugung eines Warmluftstroms, insbesondere für ein Camping-Mobil.

Im Stand der Technik sind Heizvorrichtungen zur Erzeugung von Warmluftströmen für Camping-Mobile bekannt. Dabei werden unter Camping-Mobilen Wohnmobile, Wohnanhänger, Zelte, Wohncontainer, etc. verstanden. Darüber hinaus werden Heizvorrichtungen zur Erzeugung von Warmluftströmen allgemein in Kraftfahrzeugen verwendet, um deren Innenraum zu beheizen. Die Heizvorrichtungen sind in diesem Anwendungsfall meist als sogenannte Standheizungen ausgeführt, d. h. die Heizvorrichtungen können unabhängig vom Betrieb des Antriebsmotors des Fahrzeugs genutzt werden.

Heizvorrichtungen zur Erzeugung eines Warmluftstroms können einen zu erwärmenden Luftstrom zum Beispiel über einen diesel-, benzin- oder gasbetriebenen Brenner und/oder eine elektrische Energiequelle erwärmen.

Insbesondere sind dabei sogenannte Kombinations-Heizvorrichtungen bekannt, die einen Brenner und ein Widerstands-Heizelement, z. B. ein elektrisches Heizelement, umfassen. Solche Heizvorrichtungen verfügen über drei grundsätzliche Betriebsarten. Zunächst können sie in einem reinen Brennerbetrieb genutzt werden, in dem lediglich der Brenner als Wärmequelle genutzt wird. Alternativ wird in einem reinen Elektro-Betrieb ausschließlich das elektrische Heizelement als Wärmequelle verwendet. Darüber hinaus werden in einem sogenannten Misch-Betrieb sowohl der Brenner als auch das elektrische Heizelement als Wärmequelle genutzt. Maßgeblich für die Auswahl der Energiequelle und damit des Betriebszustands kann ein Betriebszustand des Fahrzeugs oder des Camping-Mobils und/oder ein Füllgrad der zugehörigen Energiespeicher, z. B. Batterie, Diesel-, Benzin- oder Gastank, sein.

Wird eine solche Heizvorrichtung im Misch-Betrieb benutzt, so muss einerseits ein Verbrennungsluftstrom, der dem Brenner insbesondere den für die Verbrennung notwendigen Sauerstoff zuführt, und ein Luftstrom zu erwärmender Luft, auch Nutzluftstrom genannt, bereitgestellt werden. Durch Erwärmung wird der Nutzluftstrom zum Warmluftstrom. Für die Bereitstellung der Luftströme werden in der Regel Gebläse genutzt, die ein oder mehrere Gebläseräder und einen oder mehrere Gebläseradantriebe umfassen.

Im Mischbetrieb sollen je nach Bedarf unterschiedliche Heizleistungen in Form von Warmluftströmen, die sich hinsichtlich der Warmlufttemperatur und/oder hinsichtlich des Luftvolumenstroms unterscheiden, bereitgestellt werden. Dafür sind aus dem Stand der Technik Heizvorrichtungen bekannt, bei denen ein Gebläse den Verbrennungsluftstrom bereitstellt und ein davon unabhängig angetriebenes Gebläse den Nutzluftstrom generiert. Es sind folglich zwei Gebläse nötig, die über voneinander unabhängige Antriebe verfügen. Solche Heizvorrichtungen können stets die benötigten Verbrennungsluftströme und Nutzluftströme bereitstellen, benötigen jedoch einen verhältnismäßig großen Bauraum und sind in ihrem Aufbau komplex.

Vor diesem Hintergrund sind aus dem Stand der Technik auch Heizvorrichtungen bekannt, bei denen ein Gebläse mit einem Gebläserad zur Erzeugung des Verbrennungsluftstroms und einem Gebläserad zur Erzeugung des Nutzluftstroms vorgesehen ist. Die beiden Gebläseräder sind hier auf einer gemeinsamen Antriebswelle befestigt, sodass nur ein einziger Antrieb benötigt wird. Dadurch lässt sich Bauraum einsparen. Allerdings können dann die beiden Gebläseräder nicht unabhängig voneinander betrieben werden. Das bedeutet, dass der Verbrennungsluftstrom und der Nutzluftstrom miteinander gekoppelt sind.

Folglich kann es beim Misch-Betrieb dazu kommen, dass dem Brenner entweder ein zu großer oder ein zu kleiner Verbrennungsluftstrom zugeführt wird. Dies kann dazu führen, dass am Brenner kein optimales Verhältnis von Brennstoff und Verbrennungsluft eingestellt werden kann. In der Konsequenz wird der Brenner eine erhöhte Menge an Schadstoffen ausstoßen. Wird dem Brenner ein deutlich zu großer Verbrennungsluftstrom zugeführt, kann auch eine Verbrennung nicht mehr möglich sein.

Die Aufgabe der vorliegenden Erfindung ist daher, eine Heizvorrichtung zur Erzeugung eines Warmluftstroms bereitzustellen, bei der in einem Misch-Betrieb dem Brenner stets ein geeigneter Verbrennungsluftstrom bereitgestellt werden kann. Gleichzeitig soll die Heizvorrichtung einen möglichst geringen Bauraum beanspruchen und einfach aufgebaut sein.

Die Aufgabe wir durch eine Heizvorrichtung der eingangs genannten Art mit einem einzigen Gebläse, einem Brenner-Heizelement und einem Widerstands-Heizelement gelöst, wobei sich an das Gebläse stromabwärts ein Luftkanal, der zu erwärmende Luft führt, und ein Verbrennungsluftkanal anschließt, der zu einem Brenner führt, wobei ein Verbrennungsluftstrom im Verbrennungsluftkanal durch ein dem Verbrennungsluftkanal zugeordnetes Steuerungselement gesteuert werden kann. Unter einem Brenner-Heizelement wird dabei ein Heizelement verstanden, das die notwendige Wärmeenergie durch einem Brenner erhält. Beim Widerstands-Heizelement handelt es sich vorzugsweise um ein elektrisches Heizelement. Weiter ist unter dem Verbrennungsluftstrom derjenige Luftstrom zu verstehen, der für die im Brenner stattfindende Verbrennung benötigt wird. Die zu erwärmende Luft, die auch Nutzluftstrom genannt wird, wird durch das Brenner-Heizelement und das Widerstands-Heizelement erwärmt und stellt dann den Warmluftstrom dar. Das Steuerungselement ist stufenlos oder in Stufen verstellbar, wobei die Stufen Einstellungen eines Heizungsprogramms der Heizvorrichtung entsprechen können. Über das Steuerungselement kann der Verbrennungsluftstrom so eingestellt werden, dass am Brenner eine saubere, d. h. schadstoffarme, und effiziente, d. h. den Energiegehalt des Brennstoffs möglichst vollständig ausnutzende, Verbrennung stattfindet. Der Nutzluftstrom kann unabhängig davon eingestellt werden. Da nur ein einziges Gebläse vorhanden ist, das z. B. elektrisch betrieben sein kann, ist nur ein geringer Bauraum nötig.

In einer Ausführungsform ist das Steuerungselement im Verbrennungsluftkanal angeordnet. Somit kann dem Brenner genau derjenige Verbrennungsluftstrom zugeführt werden, der für eine saubere und effiziente Verbrennung benötigt wird.

Bevorzugt erfolgt das Einstellen des Verbrennungsluftstroms durch das Steuerungselement durch ein vollständiges oder teilweises Verschließen des Verbrennungsluftkanals.

Eine weitere Ausführungsform sieht vor, dass eine Rückströmleitung den Verbrennungsluftkanal und einen Einlass des Gebläses strömungsmäßig verbindet. Folglich wird der Verbrennungsluftstrom, der am Brenner bereitgestellt wird, dadurch eingestellt, dass ein steuerbarer, überflüssiger Anteil desselben an den Einlass des Gebläses zurückgeleitet wird. Am Brenner kommt also stets nur der benötigte Verbrennungsluftstrom an.

Das Steuerungselement kann in der Rückströmleitung angeordnet sein oder auch im Verbrennungsluftkanal. Durch die Dimensionierung des Steuerungselements und der Rückströmleitung, insbesondere des Querschnitts der Rückströmleitung, kann eine Verstellbandbreite des Verbrennungsluftstroms bestimmt werden. Die Anordnung des Steuerungselements in der Rückströmleitung ermöglicht zudem, das Steuerungselement bezüglich der übrigen Komponenten der Heizvorrichtung flexibel anzuordnen, sodass auf eventuelle Einschränkungen des Bauraums reagiert werden kann.

In einer Gestaltungsalternative erfolgt das Einstellen des Verbrennungsluftstroms durch das Steuerungselement durch ein vollständiges oder teilweises Ableiten des Verbrennungsluftstroms zu einem Einlass des Gebläses.

Vorteilhafterweise erlaubt das Steuerungselement eine Strömung vom Verbrennungsluftkanal zum Einlass und sperrt eine Strömung vom Einlass zum Verbrennungsluftkanal. Das Steuerungselement ist also als Rückschlagventil ausgebildet.

In einer Gestaltungsvariante umfasst die Heizvorrichtung einen Sensor zur Erfassung der Verbrennungsgüte am Brenner, wobei der Sensor mit dem Steuerungselement gekoppelt ist. Dieser Sensor kann einen Parameter erfassen, mittels dem indirekt auf die Güte der Verbrennung geschlossen werden kann, beispielsweise eine Temperatur, ein Druck oder ein lonisationssignal. Der Sensor kann alternativ auch einen Parameter erfassen, mit dem direkt die Güte der Verbrennung ermittelt werden kann. Beispielsweise kann der Sensor den Sauerstoffgehalt oder andere Eigenschaften der Luft im Verbrennungsluftstrom erfassen. Alternativ kann der Sensor als so genannter Luftmengensensor oder Lambda-Sonde ausgeführt sein, d. h. der Sensor vergleicht den Restsauerstoffgehalt nach der Verbrennung mit dem Sauerstoffgehalt der Umgebungsluft. Aufgrund der Sensorwerte wird das Steuerungselement dann so eingestellt, dass möglichst exakt der am Brenner notwendige Verbrennungsluftstrom bereitgestellt wird. Es wird so eine besonders saubere und effiziente Verbrennung erreicht.

Der Verbrennungsluftstrom kann in Abhängigkeit der Verbrennungsgüte am Brenner eingestellt werden.

Das Gebläse kann ein einziges Gebläserad umfassen, das den Luftkanal und den Verbrennungsluftkanal speist. Das Gebläserad generiert also den zu erwärmenden Luftstrom, auch Nutzluftstrom genannt, und den Verbrennungsluftstrom. Es ist so eine sehr kompakte Bauweise der Heizvorrichtung möglich. Darüber hinaus ist so der Aufbau der Heizvorrichtung sehr einfach.

Alternativ kann das Gebläse ein Nutzluftgebläserad, das den Luftkanal speist, und ein Verbrennungsluftgebläserad umfassen, das den Verbrennungsluftkanal speist. Das Nutzluftgebläserad generiert also nur den Luftstrom, der durch Erwärmen zum Warmluftstrom wird. Das Verbrennungsluftgebläserad generiert nur den Verbrennungsluftstrom. Es sind also zwei Gebläseräder vorhanden, die im Vergleich zur Ausführung mit nur einem Gebläserad jeweils für sich genommen kleiner sind.

In einer bevorzugten Ausführungsform werden der Verbrennungsluftstrom von einem Verbrennungsluftgebläserad und der Nutzluftstrom von einem Nutzluftgebläserad bereitgestellt.

Bevorzugt sind dabei das Nutzluftgebläserad und das Verbrennungsluftgebläserad drehbar gelagert, wobei eine Drehbewegung des Nutzluftgebläserads mit einer Drehbewegung des Verbrennungsluftgebläserads gekoppelt ist. Die Gebläseräder können dabei in unterschiedlichen Größen und Konfigurationen ausgeführt sein. Die Kopplung erfolgt vorzugsweise über ein Getriebe. Alternativ können die Gebläseräder auf der gleichen Welle angeordnet sein. Durch die Kopplung der Gebläseräder ist nur ein Gebläseradantrieb nötig, sodass nur ein geringer Bauraum beansprucht wird.

Gemäß einer bevorzugten Ausführungsform ist vorgesehen, dass das Steuerungselement eine Ventilklappe oder eine Drosselklappe ist. Auf diese Weise kann mit geringem Aufwand der zur Verfügung stehende Strömungsquerschnitt und damit auch der Volumendurchsatz in der gewünschten Weise eingestellt werden.

Es ist auch möglich, dass das Steuerungselement ein Leitelement innerhalb des Gebläses ist, mit dem ein interner Rückstrom freigegeben werden kann. Auf diese Weise kann bereits innerhalb des Gebläses der Volumenstrom beeinflusst werden.

Eine weitere Aufgabe der vorliegenden Erfindung ist, ein Verfahren bereitzustellen, mit dem eine Heizvorrichtung zur Erzeugung eines Warmluftstroms im Misch-Betrieb so betrieben werden kann, dass der Brenner stets mit einem geeigneten Luftstrom versorgt wird.

Die Aufgabe wird durch ein Verfahren zum Betreiben einer Heizvorrichtung zur Erzeugung eines Warmluftstroms gelöst, wobei die Heizvorrichtung ein einziges Gebläse umfasst und sich an das Gebläse stromabwärts ein Luftkanal, der zu erwärmende Luft führt, und ein Verbrennungsluftkanal anschließt, der zu einem Brenner führt. Das Verfahren umfasst die folgenden Schritte:
a) Bereitstellen eines durch das Gebläse erzeugten Verbrennungsluftstroms im Verbrennungsluftkanal,
b) Bereitstellen eines durch das Gebläse erzeugten Nutzluftstroms im Luftkanal, wobei der Nutzluftstrom durch Erwärmen zum Warmluftstrom wird, und
c) Einstellen des Verbrennungsluftstroms durch ein Steuerungselement.

Der Verbrennungsluftstrom kann damit stets so eingestellt werden, dass er genau dem am Brenner benötigten Luftstrom entspricht. Insbesondere kann der Verbrennungsluftstrom unabhängig vom Nutzluftstrom eingestellt werden.

Die Erfindung wird nachstehend anhand verschiedener Ausführungsbeispiele erläutert, die in den beigefügten Zeichnungen gezeigt sind. Es zeigen:
- Figur 1 schematisch eine erste Ausführungsform der erfindungsgemäßen Heizvorrichtung,
- Figur 2 schematisch eine zweite Ausführungsform der erfindungsgemäßen Heizvorrichtung,
- Figur 3 schematisch eine dritte Ausführungsform der erfindungsgemäßen Heizvorrichtung und
- Figur 4 eine teilweise geschnittene Darstellung einer vierten Ausführungsform der erfindungsgemäßen Heizvorrichtung.

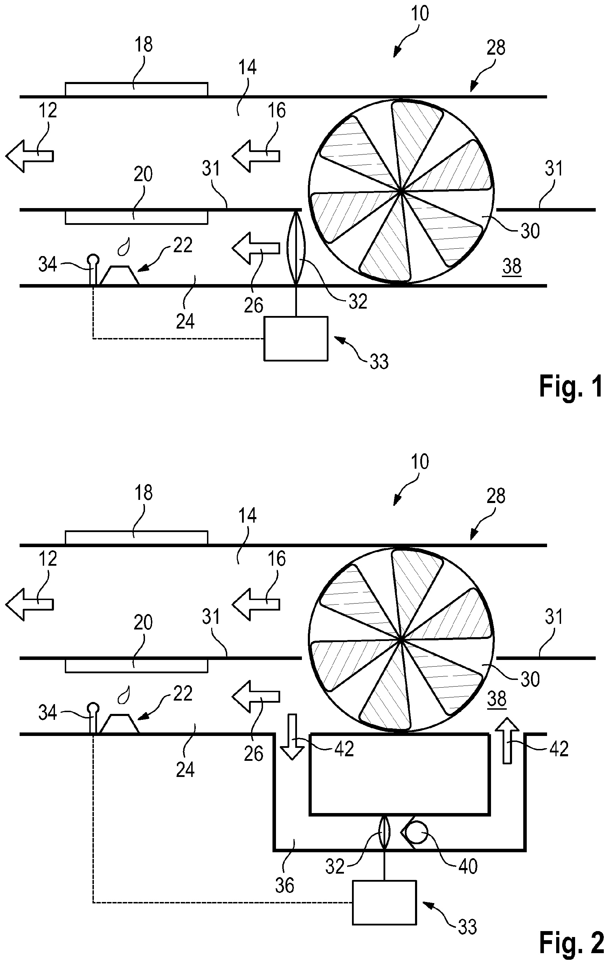

In der Figur 1 ist eine erste Ausführungsform einer Heizvorrichtung 10 zu sehen. Die Heizvorrichtung 10 ist dazu ausgebildet, einen Warmluftstrom 12 zu generieren.

Dafür umfasst die Heizvorrichtung 10 einen Luftkanal 14, in den ein Nutzluftstrom 16 eingebracht wird. Dieser wird von einem Widerstands-Heizelement 18 und einem Brenner-Heizelement 20 erwärmt, sodass aus dem Nutzluftstrom 16 der Warmluftstrom 12 wird.

Das Widerstands-Heizelement 18 kann zum Beispiel ein elektrisches Heizelement sein.

Das Brenner-Heizelement 20 überträgt Wärmeenergie, die von einem Brenner 22 erzeugt wird, auf den Nutzluftstrom 16.

Damit am Brenner 22 eine Verbrennung stattfinden kann, wird diesem über einen Verbrennungsluftkanal 24 ein Verbrennungsluftstrom 26 zugeführt.

In der dargestellten Ausführungsform wird sowohl der Nutzluftstrom 16 als auch der Verbrennungsluftstrom 26 durch ein einziges Gebläse 28 mit einem einzigen Gebläserad 30 generiert. Dennoch sind die beiden Luftströme getrennt geführt, wie durch die durchgehende Trennwand 31 symbolisiert wird.

Der Verbrennungsluftstrom 26 kann durch ein Steuerungselement 32 eingestellt werden. In der dargestellten Ausführungsform ist das Steuerungselement 32 im Verbrennungsluftkanal 24 angeordnet und kann diesen vollständig oder teilweise absperren. Das Steuerungselement 32 ist hier als Ventilelement oder Drosselklappe ausgeführt. Zur Verstellung ist ein Stellantrieb 33 vorgesehen.

Alternativ zur gezeigten Anordnung des Steuerungselements 32 kann es auch stromaufwärts des Gebläserades 30 angeordnet sein.

Am Brenner 22 ist zudem ein Sensor 34 angeordnet, der die Verbrennungsgüte am Brenner 22 erfassen kann. Der Sensor 34 ist mit dem Steuerungselement 32 gekoppelt.

Die Funktion der Heizvorrichtung 10 wird im Folgenden anhand des sogenannten Misch-Betriebs beschrieben, bei dem der Nutzluftstrom 16 sowohl über das Widerstands-Heizelement 18 als auch über das Brenner-Heizelement 20 erwärmt und so zum Warmluftstrom 12 wird.

In einem ersten Anwendungsfall sei eine Gesamtheizleistung von 4 kW gefordert, wovon 2 kW durch das Widerstands-Heizelement 18 und 2 kW durch das Brenner-Heizelement 20 geleistet werden.

Das Gebläserad 30 wird nun so eingestellt, dass es sowohl den Nutzluftstrom 16, der einer Gesamtheizleistung von 4 kW entspricht, als auch mindestens den Verbrennungsluftstrom 26, der für eine Brennerleistung von 2 kW benötigt wird, bereitstellt.

Durch die konstruktive Gestaltung des Luftkanals 14 und des Verbrennungsluftkanals 24 ist jedoch ein Verhältnis des Nutzluftstroms 16 zum Verbrennungsluftstrom 26 vorgegeben. Maßgeblich dafür kann das Verhältnis der Leitungsquerschnittsflkächen des Luftkanals 14 und des Verbrennungsluftkanals 24 sein.

Dadurch kann es sein, dass das Gebläserad 30 zu viel Luft in den Verbrennungsluftkanal 24 speist.

Dies wird jedoch durch das Steuerungselement 32 verhindert, das so eingestellt wird, dass exakt die der Brennerleistung von 2 kW entsprechende Luftmenge über den Verbrennungsluftstrom 26 dem Brenner 22 zugeführt wird.

Während des Betriebs erfasst der Sensor 34 die Verbrennungsgüte am Brenner 22 und bewirkt über die Kopplung mit dem Steuerungselement 32, dass der dem Brenner 22 zugeführte Verbrennungsluftstrom 26 im Falle einer unzureichenden Verbrennungsgüte nachjustiert wird. Dies erfolgt durch ein Nachstellen des Steuerungselements 32.

In einem zweiten Anwendungsfall seien wieder 4 kW Gesamtheizleistung gefordert. Dabei sollen jedoch 3 kW der Gesamtheizleistung über das Widerstands-Heizelement 18 und 1 kW der Gesamtheizleistung über das Brenner-Heizelement 20 zugeführt werden.

Im Vergleich zum ersten Anwendungsfall wird nun deutlich, dass trotz einer gleichbleibenden Gesamtheizleistung von 4 kW, die mit einem gleichbleibenden Nutzluftstrom 16 einhergeht, ein geringerer Verbrennungsluftstrom 26 benötigt wird.

Das Steuerungselement 32 wird daher so eingestellt, dass der Verbrennungsluftstrom 26 einer Brennerleistung von 1 kW entspricht. Wieder kann die Stellung des Steuerungselements 32 durch ein Erfassen der Verbrennungsgüte mithilfe des Sensors 34 nachjustiert werden.

Der Sensor muss nicht zwingend stromabwärts des Brenners angeordnet sein. Abhängig von den Parametern, die er erfasst, kann er auch stromaufwärts des Brenners angeordnet sein.

Eine zweite Ausführungsform der Heizvorrichtung 10 ist in Figur 2 dargestellt. Im Unterschied zur ersten Ausführungsform aus Figur 1 ist bei dieser das Steuerungselement 32 in einer Rückströmleitung 36 angeordnet, die den Verbrennungsluftkanal 24 mit einem Einlass 38 des Gebläses 28 strömungsmäßig verbindet.

Um zu verhindern, dass über die Rückströmleitung 36 Luft vom Einlass 38 in den Verbrennungsluftkanal 24 strömt, kann das Steuerungselement 32 ein Rückschlagventil 40 umfassen.

Der vom Gebläserad 30 in den Verbrennungsluftkanal 24 gespeiste Luftstrom teilt sich somit in den am Brenner 22 bereitgestellten Verbrennungsluftstrom 26 und einen Rückluftstrom 42 auf.

Der Rückluftstrom 42 ist über das Steuerungselement 32 einstellbar.

Alternativ kann auch vorgesehen sein, dass das Steuerungselement 32, das hier ebenfalls als Ventilelement oder Drosselklappe ausgeführt ist, im Verbrennungsluftkanal 24 angeordnet ist und durch den dort erzeugten Staudruck den Volumenstrom steuert.

Wird nun wieder eine Gesamtheizleistung von 4 kW gefordert, von der jeweils 2 kW vom Widerstands-Heizelement 18 und vom Brenner-Heizelement 20 aufgebracht werden sollen, wird das Gebläserad 30 so eingestellt, dass es den 4 kW Gesamtheizleistung entsprechenden Nutzluftstrom 16 und mindestens den 1 kW Brennerleistung entsprechenden Verbrennungsluftstrom 26 bereitstellt.

Wie in der ersten Ausführungsform beschrieben, ist das Verhältnis des in den Verbrennungsluftkanal 24 gespeisten Luftstroms und des in den Luftkanal 14 gespeisten Luftstroms konstruktiv festgelegt.

Daher speist das Gebläserad 30 möglicherweise zu viel Luft in den Verbrennungsluftkanal 24.

Die überschüssige Luftmenge im Verbrennungsluftkanal 24 kann daher als Rückluftstrom 42 über die Rückströmleitung 36 zum Einlass 38 des Gebläses 28 zurückgeführt werden. Dabei wird die Größe des Rückluftstroms 42 durch das Steuerungselement 32 eingestellt.

Am Brenner 22 kommt also der vom Gebläserad 30 in den Verbrennungsluftkanal 24 geförderte Luftstrom abzüglich des über die Rückströmleitung 36 zurückgeführten Rückluftstroms 42 an.

Wieder wird durch den Sensor 34 die Verbrennungsgüte erfasst und der Sensorwert zur Einstellung des Steuerungselements 32 genutzt.

Für den Fall, dass eine Gesamtheizleistung von 4 kW dadurch realisiert werden soll, dass 3 kW über das Widerstands-Heizelement 18 und 1 kW über das Brenner-Heizelement 20 bereitgestellt werden, wird am Brenner 22 nur ein kleinerer Verbrennungsluftstrom 26 benötigt.

Der Verbrennungsluftstrom 26 wird dann durch das Rückleiten eines entsprechend größeren Rückluftstroms 42 durch die Rückströmleitung 36 eingestellt. Dafür wird das Steuerungselement 32 entsprechend verstellt.

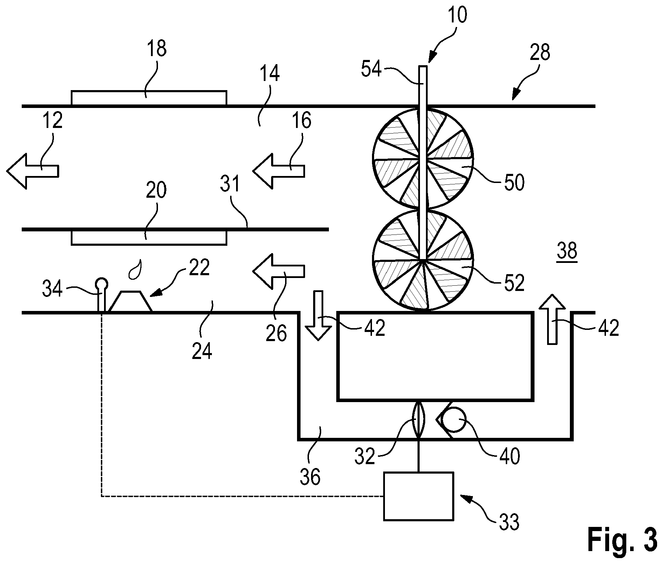

In der Figur 3 ist eine dritte Ausführungsform der Heizvorrichtung 10 dargestellt. Im Unterschied zur ersten und zweiten Ausführungsform umfasst das Gebläse bei dieser Ausführungsform ein Nutzluftgebläserad 50 und ein Verbrennungsluftgebläserad 52, also insgesamt zwei Gebläseräder.

Dabei generiert das Nutzluftgebläserad 50 den Nutzluftstrom 16 und das Verbrennungsluftgebläserad 52 den Verbrennungsluftstrom 26.

In der dargestellten Ausführungsform sind das Nutzluftgebläserad 50 und das Verbrennungsluftgebläserad 52 drehbar gelagert. Die Drehbewegung der beiden Gebläseräder ist dadurch gekoppelt, dass sie auf einer gemeinsamen Welle 54 angeordnet sind.

Das Steuerungselement 32 ist bei dieser Ausführungsform analog zur zweiten Ausführungsform (siehe Figur 2) in der Rückströmleitung 36 angeordnet.

Alternativ könnte analog zur ersten Ausführungsform das Steuerungselement 32 auch direkt im Verbrennungsluftkanal 24 angeordnet sein. Eine solche Variante ist nicht dargestellt.

Die Funktionsweise der Heizvorrichtung gemäß der dritten Ausführungsform ist wie in der zweiten Ausführungsform. Allerdings ist hier das Verhältnis der in den Luftkanal 14 und in den Verbrennungsluftkanal 24 gespeisten Luftströme durch die Gestaltung des Nutzluftgebläserads 50 und des Verbrennungsluftgebläserads 52 festgelegt.

Auch bei dieser Ausführungsform ist denkbar, das Steuerungselement 32 außerhalb der Rückströmleitung 36 anzuordnen.

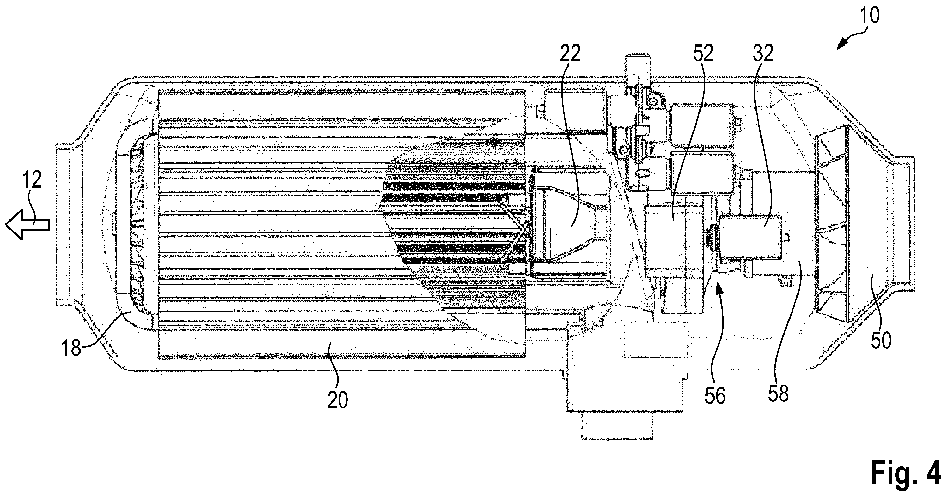

In der Figur 4 ist eine vierte Ausführungsform zu sehen, die analog zur in Figur 3 gezeigten dritten Ausführungsform das Nutzluftgebläserad 50 und das Verbrennungsluftgebläserad 52 umfasst.

Die Drehbewegungen des Nutzluftgebläserads 50 und des Verbrennungsluftgebläserads sind hier über ein Getriebe 56 gekoppelt, sodass für beide Gebläseräder nur ein Antrieb 58 notwendig ist.

Über das Steuerungselement 32 wird wieder die Größe des Rückluftstroms 42 eingestellt, sodass stets ein geeigneter Verbrennungsluftstrom 26 am Brenner 22 zur Verfügung steht.

Die Funktionsweise der Heizvorrichtung 10 nach der vierten Ausführungsform ist analog zur dritten Ausführungsform in Fig. 3.

## Patentansprüche

1. Heizvorrichtung (10) zur Erzeugung eines Warmluftstroms (12), insbesondere für ein Camping-Mobil, mit einem einzigen Gebläse (28), einem Brenner-Heizelement (20) und einem Widerstands-Heizelement (18), wobei sich an das Gebläse (28) stromabwärts ein Luftkanal (14), der zu erwärmende Luft führt, und ein Verbrennungsluftkanal (24) anschließt, der zu einem Brenner (22) führt, wobei ein Verbrennungsluftstrom (26) im Verbrennungsluftkanal (24) durch ein dem Verbrennungsluftkanal (24) zugeordnetes Steuerungselement (32) gesteuert werden kann.

2. Heizvorrichtung (10) nach Anspruch 1, **dadurch gekennzeichnet, dass** das Steuerungselement (32) im Verbrennungsluftkanal (24) angeordnet ist.

3. Heizvorrichtung (10) nach Anspruch 1 oder Anspruch 2, **dadurch gekennzeichnet, dass** eine Rückströmleitung (36) den Verbrennungsluftkanal (24) und einen Einlass (38) des Gebläses (28) strömungsmäßig verbindet.

4. Heizvorrichtung (10) nach Anspruch 3, **dadurch gekennzeichnet, dass** das Steuerungselement (32) in der Rückströmleitung (36) angeordnet ist.

5. Heizvorrichtung (10) nach Anspruch 4, **dadurch gekennzeichnet, dass** das Steuerungselement (32) eine Strömung vom Verbrennungsluftkanal (24) zum Einlass (38) erlaubt und eine Strömung vom Einlass (38) zum Verbrennungsluftkanal (24) sperrt.

6. Heizvorrichtung (10) nach einem der vorhergehenden Ansprüche, **dadurch gekennzeichnet, dass** sie einen Sensor (34) zur Erfassung der Verbrennungsgüte am Brenner (22) umfasst und der Sensor (34) mit dem Steuerungselement (32) gekoppelt ist.

7. Heizvorrichtung (10) nach einem der vorhergehenden Ansprüche, **dadurch gekennzeichnet, dass** das Gebläse (28) ein einziges Gebläserad (30) umfasst, das den Luftkanal (14) und den Verbrennungsluftkanal (24) speist.

8. Heizvorrichtung (10) nach einem der Ansprüche 1 bis 6, **dadurch gekennzeichnet, dass** das Gebläse (28) ein Nutzluftgebläserad (50), das den Luftkanal (14) speist, und ein Verbrennungsluftgebläserad (52) umfasst, das den Verbrennungsluftkanal (24) speist.

9. Heizvorrichtung (10) nach Anspruch 8, **dadurch gekennzeichnet, dass** das Nutzluftgebläserad (50) und das Verbrennungsluftgebläserad (52) drehbar gelagert sind, wobei eine Drehbewegung des Nutzluftgebläserads (50) mit einer Drehbewegung des Verbrennungsluftgebläserads (52) gekoppelt ist.

10. Heizvorrichtung nach einem der vorhergehenden Ansprüche, **dadurch gekennzeichnet, dass** das Steuerungselement eine Ventilklappe oder eine Drosselklappe ist.

11. Heizvorrichtung nach einem der Ansprüche 1 bis 9, **dadurch gekennzeichnet, dass** das Steuerungselement ein Leitelement innerhalb des Gebläses ist, mit dem ein interner Rückstrom freigegeben werden kann.

12. Verfahren zum Betreiben einer Heizvorrichtung (10) zur Erzeugung eines Warmluftstroms (12), insbesondere für ein Camping-Mobil, mit einem einzigen Gebläse (28), wobei sich an das Gebläse (28) stromabwärts ein Luftkanal (14), der zu erwärmende Luft führt, und ein Verbrennungsluftkanal (24) anschließt, der zu einem Brenner (22) führt, mit den folgenden Schritten:
a) Bereitstellen eines durch das Gebläse (28) erzeugten Verbrennungsluftstroms (26) im Verbrennungsluftkanal (24),
b) Bereitstellen eines durch das Gebläse (28) erzeugten Nutzluftstroms (16) im Luftkanal (14), wobei der Nutzluftstrom (16) durch Erwärmen zum Warmluftstrom (12) wird, und
c) Einstellen des Verbrennungsluftstroms (26) durch ein Steuerungselement (32).

13. Verfahren nach Anspruch 12, **dadurch gekennzeichnet, dass** der Schritt c) durch ein vollständiges oder teilweises Verschließen des Verbrennungsluftkanals (24) erfolgt.

14. Verfahren nach Anspruch 12, **dadurch gekennzeichnet, dass** der Schritt c) durch ein vollständiges oder teilweises Ableiten des Verbrennungsluftstroms (26) zu einem Einlass (38) des Gebläses (28) erfolgt.

15. Verfahren nach einem der Ansprüche 12 bis 14, **dadurch gekennzeichnet, dass** der Verbrennungsluftstrom (26) und der Nutzluftstrom (16) von einem einzigen Gebläserad (30) bereitgestellt werden.

16. Verfahren nach einem der Ansprüche 12 bis 14, **dadurch gekennzeichnet, dass** der Verbrennungsluftstrom (26) von einem Verbrennungsluftgebläserad (52) und der Nutzluftstrom (16) von einem Nutzluftgebläserad (50) bereitgestellt wird.

17. Verfahren nach einem der Ansprüche 12 bis 16, **dadurch gekennzeichnet, dass** der Verbrennungsluftstrom (26) in Abhängigkeit der Verbrennungsgüte am Brenner (22) eingestellt wird.
